# EUROPEAN PATENT APPLICATION

(11) **EP 1 580 967 A2**
(43) Date of publication of application: **28.09.2005**
(21) Application number: 05102084.0
(22) Date of filing: 16.03.2005
(51) Int. Cl.: H04M 1/02, H04M 1/725

(54) **Display apparatus, display switching method thereof, and electronic equipment including display device**

(30) Priority: 22.03.2004 JP 2004083336
(71) Applicant: NEC CORPORATION, Tokyo (JP)
(72) Inventor: Toba, Hiroyuki, Tokyo (JP)
(74) Representative: Betten & Resch

(57) **Abstract**

electronic equipment includes a first case including a first display device having a display screen, a second case including input means, open-and-close means for connecting the first case with the second case such that the first case and the second case are allowed to be opened and closed, detection means for detecting a tilt of the first display device relative to a horizontal direction, and switching means for switching a display direction on the display screen of the first display device to a direction according to a direction of the tilt detected by the detection means.

## Description

### BACKGROUND OF THE INVENTION

### Field of the Invention

The present invention relates to a display apparatus, a display switching method thereof, and electronic equipment including a display device. More particularly, the present invention relates to a display apparatus in which a display direction of display contents displayed on a display screen thereof is switchable, a display switching method thereof, and electronic equipment including a display device.

### Description of the Related Art

Recent information technology (IT) has been widely used for portable telephones. For example, the following technique is disclosed (see JP 2000-332866 A). When the attitude of a portable telephone in a direction along a vertical line thereof changes, this change is detected by a gravity sensor and a display direction of display contents displayed on a display screen is switched to an adequate direction (vertical direction of data such as a character is a direction along a vertical line) based on a result obtained by the detection.

A technique capable of folding the display device in a folding direction with a state where the display screen thereof faces the inside or the outside is disclosed for foldable type portable telephones which have been widely available in recent years (see JP 2003-174495 A).

According to the portable telephone using the technique disclosed in JP 2003-174495 A, when the display device is folded with a state where the display screen thereof faces the outside, the display direction of display contents displayed on the display screen can be switched to a readable direction (front direction).

When one wishes to show the display contents on the display screen of the display device to a third person, the display screen of the display device of the portable telephone is tilted to oppose the third person (display screen of the display device is tilted relative to the horizontal direction). In this case, in order to face the display contents displayed on the display screen in a direction adequate for the third person (front direction in which data such as a character is visible and readable for the third person), a manner of holding the portable telephone is changed to face the display screen in the direction adequate for the third person.

On the other hand, according to the technique described in JP 2000-332866 A, the display direction on the display screen is switched to a readable direction every time the portable telephone is rotated at 90 degrees in a state where the portable telephone is held in the vertical (perpendicular) direction (see paragraph number [0018] and FIG. 4 in JP 2000-332866 A). In addition, according to JP 2000-332866 A, when a selector switch is operated in a state where the portable telephone is held, switching of the display direction on the display screen is performed (see paragraph number [0021] and FIG. 5 in JP 2000-332866 A). That is, according to JP 2000-332866 A, when the portable telephone (display device) is tilted relative to the horizontal direction, switching of the display direction on the display screen can be performed only by operating the selector switch.

A structure in which switching of the display direction on the display screen is performed by operating (pressing) operating keys is disclosed in JP 2003-174495 A (see paragraph number [0077] and FIG. 8b in JP 2003-174495 A). Therefore, according to the techniques disclosed in JP 2000-332866 A and JP 2003-174495 A, when the orientation on the display screen of the display device is changed in a state where the portable telephone (display device) is held in the horizontal direction, it is necessary to operate the operating keys every time the orientation is changed.

According to JP 2003-174495 A, a foldable type portable telephone is constructed such that the orientation of display contents on the display screen can be switched to a readable orientation in a state where the display device is folded such that the display screen thereof faces the outside (see paragraph number [0081] and FIG. 6d in JP 2003-174495 A). In the folded state, a display control circuit changes the orientation on the display screen such that display contents reverse (rotate at 180 degrees) based on a result obtained by detection means for detecting the state where the display device is folded.

### SUMMARY OF THE INVENTION

In view of the foregoing and other exemplary problems, drawbacks, and disadvantages of the conventional structures, an exemplary feature of the present invention is to provide a display apparatus in which a display direction on a display screen thereof is switchable according to a tilt direction of a display device relative to the horizontal direction, a display switching method thereof, and electronic equipment including the display device.

According to one exemplary aspect of the present invention, there is provided electronic equipment, including: a first case including a first display device having a display screen; a second case including an input means; open-and-close means for connecting the first case with the second case such that the first case and the second case are allowed to be opened and closed; detection means for detecting a tilt of the first display device relative to a horizontal direction; and switching means for switching a display direction on the display screen of the first display device to a direction according to a direction of the tilt detected by the detection means.

According to another exemplary aspect of the present invention, there is provided electronic equipment, including: a case including a display device having a display screen; tilt detection means for detecting a tilt of the display device relative to a horizontal direction; and switching means for switching a display direction on the display screen of the display device to a direction according to a direction of the tilt detected by the tilt detection means.

According to another exemplary aspect of the present invention, there is provided a display apparatus, including: tilt detection means for detecting a tilt of a display device relative to a horizontal direction; and switching means for switching a display direction on a display screen of the display device to a direction according to a direction of the tilt detected by the tilt detection means.

According to another exemplary aspect of the present invention, there is provided a display switching method, including: detecting a tilt of a display device relative to a horizontal direction; and switching a display direction on a display screen of the display device to a direction according to a direction of the tilt based on a result of the detection.

According to another exemplary aspect of the present invention, there is provided a method of a program provider for providing a computer program to electric equipment having a display devise, including: storing a computer program which is implemented by the electric equipment and at least includes the steps of:
(i) detecting a tilt of the display device relative to a horizontal direction,
(ii) translating the result of the detection into data and
(iii)switching, based on the data, a display direction on a display screen of the display devise;
and providing the computer program to the electric equipment.

According to another exemplary aspect of the present invention, there is provided electronic equipment, including: a first case including a first display device having a display screen; a second case including an operating device; a hinge which connects the first case with the second case such that the first case and the second case are allowed to be opened and closed; a detection unit which detects a tilt of the first display device relative to a horizontal direction; and a switching unit which switches a display direction on the display screen of the first display device to a direction according to a direction of the tilt detected by the detection unit.

In the exemplary display apparatus of the present invention, the display switching method thereof, and the electronic equipment thereof, the display direction on the display screen of the display device is switched to a direction according to the tilt direction of the display device based on the result obtained by, for example, the tilt detection means. Therefore, according to the present invention, the display direction on the display screen is switched only by tilting the display device relative to the horizontal direction. As a result, it is unnecessary to change a manner of holding an electrical device such as a portable telephone or to perform the conventional key operation, so that the electrical device or the like becomes convenient. In addition, in the present invention, for example, the switching means switches the display direction on the display screen to a direction according to the tilt direction with respect to a tilt of the display device relative to the horizontal direction. As a result, switching of the display direction on the display screen becomes quicker.

### BRIEF DESCRIPTION OF THE DRAWINGS

In the accompanying drawings:
FIG. 1 is a block diagram showing a portable telephone according to a first exemplary embodiment of the present invention;
FIG. 2 is a perspective view showing the portable telephone according to the first exemplary embodiment;
FIG. 3 is a side view showing a state where the portable telephone shown in FIG. 2 is tilted in a direction indicated by an arrow A;
FIG. 4 is a concept view showing an acceleration sensor shown in FIG. 3;
FIG. 5 is a perspective view showing a state where the portable telephone shown in FIG. 2 is tilted in a direction indicated by an arrow B;
FIG. 6 is a side view showing the portable telephone shown in FIG. 5;
FIG. 7 shows an example of a display screen of a display device shown in FIG. 2;
FIG. 8 is a flowchart showing a display switching mode in the first exemplary embodiment;
FIG. 9 is a block diagram showing a portable telephone according to a second exemplary embodiment of the present invention;
FIG. 10 is a side view showing the portable telephone according to the second exemplary embodiment;
FIG. 11 is a concept view showing an acceleration sensor shown in FIG. 10;
FIG. 12 is a side view showing a state where the portable telephone shown in FIG. 10 is tilted in the direction indicated by the arrow B;
FIG. 13 is a perspective view showing a state where the portable telephone shown in FIG. 10 is tilted in a direction indicated by an arrow C;
FIG. 14 is a perspective view showing a state where the portable telephone shown in FIG. 10 is tilted in a direction indicated by an arrow D;
FIG. 15 shows an example of a display screen of a display device shown in FIG. 13;
FIG. 16 is a perspective view showing a portable telephone according to a third exemplary embodiment of the present invention;
FIG. 17 shows a state where a display device of the portable telephone shown in FIG. 16 is folded inside;
FIG. 18 shows a state where the display device of the portable telephone shown in FIG. 16 is folded outside;
FIG. 19 is a flowchart showing a display switching mode for a folded mode in the third exemplary embodiment;
FIG. 20 shows a state where a display direction on a display screen of the display device shown in FIG. 18 is switched; and
FIG. 21 is a block diagram showing a configuration of a provider system according to a fourth exemplary embodiment of the present invention.

### DETAILED DESCRIPTION OF THE EXEMPLARY EMBODIMENTS

### (First Exemplary embodiment)

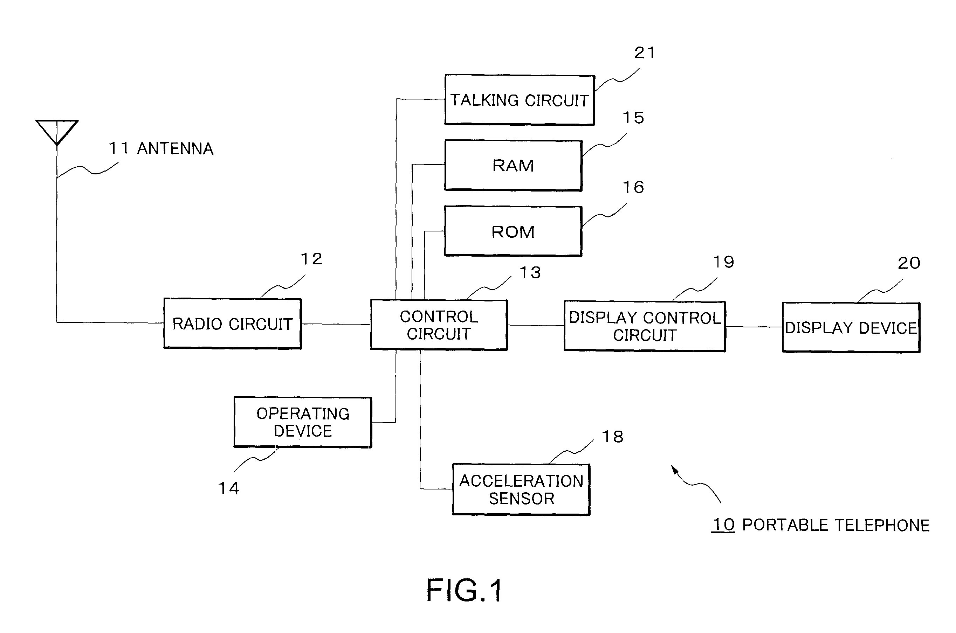

Hereinafter, a display apparatus, a display switching method, and electronic equipment such as a portable telephone according to a first exemplary embodiment of the present invention will be described with reference to FIGS. 1 to 8. In the portable telephone according to the first exemplary embodiment, a tilt state relative to the horizontal direction in the longitudinal direction (Y-direction) of the display device is detected. Therefore, in the first exemplary embodiment, an orientation on a display screen of the display device is controlled to switch between two directions of 0-degree and 180-degree.

### (Schematic Structure of Portable Telephone)

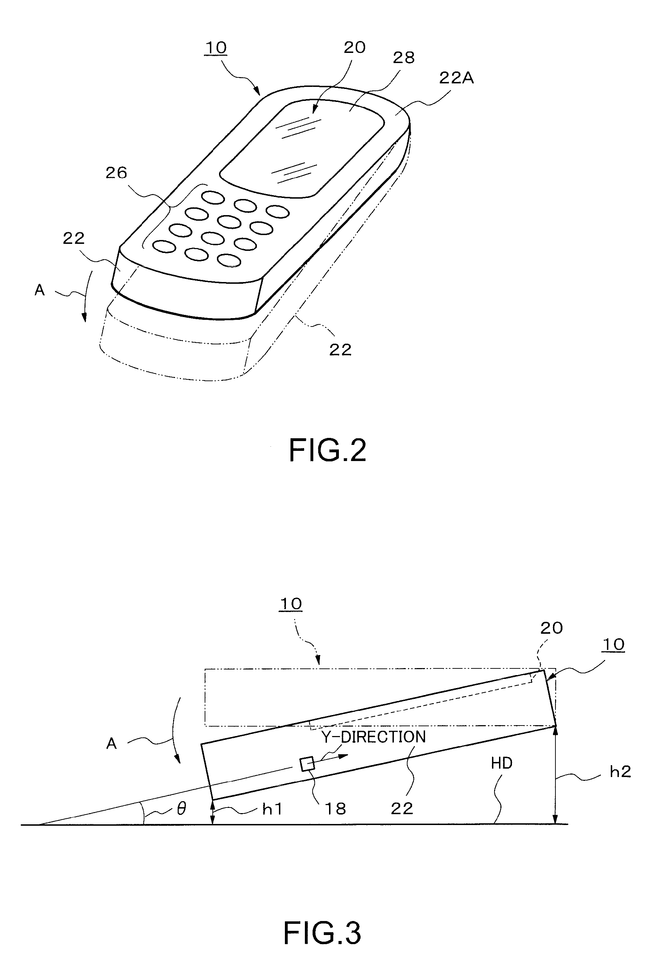

As shown in FIG. 2, a portable telephone 10 includes a (first) display device 20 having a display surface (display screen) 28 and a plurality of (operating) keys 26 composing a part of input means, which are provided on a surface 22A side of a single case 22.

As shown in FIG. 1, the portable telephone 10 includes an antenna 11 for transmitting and receiving a radio signal, a radio circuit 12 connected with the antenna 11, a control circuit 13 having switching means or determination means, and an operating device 14 (having the keys 26 shown in FIG. 2) connected with the control circuit 13. The radio circuit 12 connected with the control circuit 13 modulates an audio signal or a data signal into the radio signal. In addition, the radio circuit 12 demodulates the radio signal received from the antenna 11 to obtain the audio signal or the data signal.

The operating device 14 which is the input means has various keys 26 (see FIG. 2) such as a power source key, mode setting keys, and numeric keys for inputting characters and the like. That is, the operating device 14 has the numeric keys, for example, from "0" to "9", symbolic keys such as "*" and "#", and functional keys such as "start", "select", "end", and "redial". The functional keys and the like are assigned to various keys.

The control circuit 13 is composed of a central processing unit (CPU), a timer circuit, and the like and composes a part of the switching means. The control circuit 13 controls the entire operation of the portable telephone 10. For example, when the keys 26 (see FIG. 2) of the operating device 14 are operated, the control circuit 13 performs processing based on the operation.

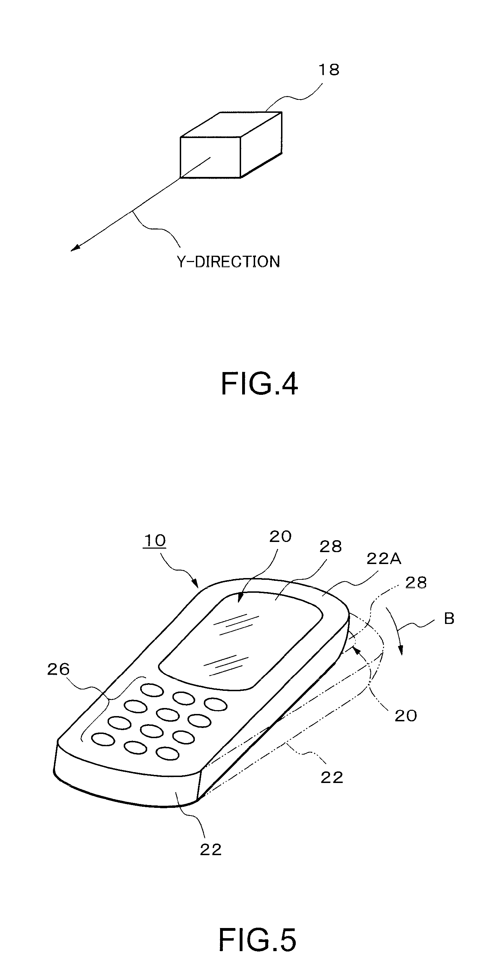

The portable telephone 10 further includes a random access memory (RAM) 15 serving as recording means, a read only memory (ROM) 16 serving as memory means, and an acceleration sensor 18 (see FIGS. 3 and 4). The RAM 15, the ROM 16, and the acceleration sensor 18 are connected with the control circuit 13. The acceleration sensor 18 detects a tilt and outputs detection signals (detection voltages) indicating the tilt to the control circuit 13. The control circuit 13 determines a tilt direction of the case 22, that is, a tilt direction of the display device 20 based on the detection signals from the acceleration sensor 18. The acceleration sensor 18 and the control circuit 13 compose tilt detection means (tilt detection unit).

In other words, as shown in FIG. 3, the acceleration sensor 18 is located in the case 22 so as to be capable of detecting a tilt (angle θ) of the display device 20 relative to the horizontal direction (HD) (see FIG. 2). The acceleration sensor 18 is a uniaxial acceleration sensor (the number of detectable axial directions is one) and can detect the tilt of the display device 20 in the longitudinal direction (Y-direction) thereof.

The acceleration sensor 18 is set so as to output the detection signals (detection voltages) to the control circuit 13 when it detects an angle θ (see FIG. 3) of, for example, 10 degrees or more. A set angle θ for outputting the detection signals to the control circuit 13 can be arbitrarily changed.

The acceleration sensor 18 detects the tilt (angle θ) relative to the horizontal direction (HD) by detecting voltages at both ends of a cylinder (not shown) filled with a helium gas, which is changed due to the movement of the helium gas in the Y-direction of the cylinder (longitudinal direction of the display device 20). In other words, the control circuit 13 (see FIG. 1) composing the (tilt) detection means compares the respective voltages detected by the acceleration sensor 18 composing the detection means with each other to detect (calculate) the angle θ, that is, the tilt direction of the case 22 (display device 20).

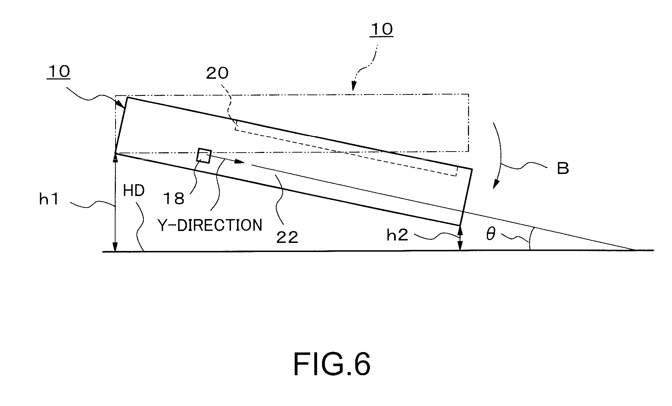

For example, in a state of the case 22 as shown in a solid line of FIG. 3, when the horizontal direction (HD) is set as a reference, a height h1 of one edge portion of the case 22 in the longitudinal direction (Y-direction) thereof becomes lower than a height h2 of the other edge portion of the case 22 in the longitudinal direction (Y-direction) thereof. On the other hand, in a state of the case 22 as shown in a solid line of FIG. 6, a positional relationship in the case shown in FIG. 3 is reversed, so that the height h2 becomes lower than the height h1.

Note that the acceleration sensor 18 may be a generally known movable plate type sensor (sensor for detecting a change in voltage due to the movement of a movable plate) or the like in addition to the above-mentioned gas type sensor.

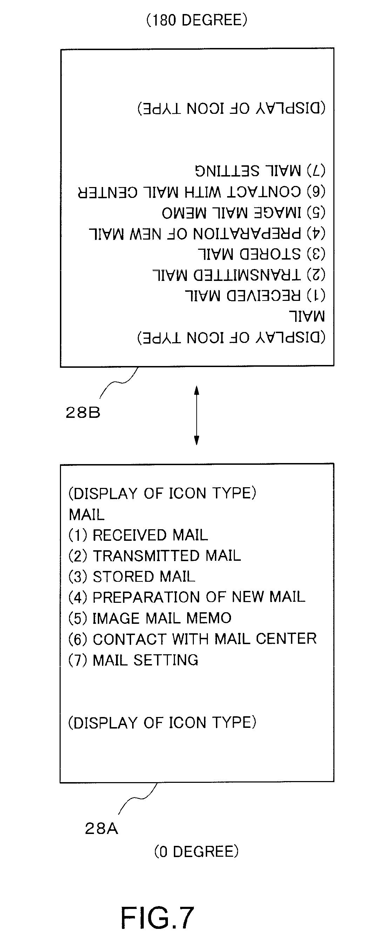

For example, in order to improve the visibility on the display screen 28A (see FIG. 7) of the portable telephone 10 held by a user, the user tilts the display device 20 of the portable telephone 10 such that the display screen 28A faces user's eyes (opposes user's eyes). In other words, the operating keys 26 side of the case 22 (portable telephone 10) shown in FIG. 2 is tilted along an arrow A (see FIGS. 2 and 3), so that the portable telephone 10 moves from a position indicated by the solid line of FIG. 2 to a position indicated by a two-dot chain line of FIG. 2 (see a solid line shown in FIG. 3).

When a user holding the portable telephone 10 intends to show the display screen 28A of the display device 20 to a third person opposed to the user, the user tilts the portable telephone 10 in a direction reverse to the above-mentioned direction (see an arrow B shown in FIGS. 5 and 6). Therefore, the portable telephone 10 moves from a position indicated by a solid line of FIG. 5 to a position indicated by a two-dot chain line of FIG. 5 (see a solid line shown in FIG. 6).

When the acceleration sensor 18 detects the tilt, the control (determination) circuit 13 shown in FIG. 1 determines a tilt direction shown in FIG. 3 or 4 based on the detection voltages (detection signals) from the acceleration sensor 18. Then, the control (determination) circuit 13 outputs a control signal to the display control circuit 19 shown in FIG. 1. As apparent from the display screens 28A and 28B (see FIG. 7), the display control circuit 19 controls a display direction (scrolling direction) to switch between two directions of 0-degree and 180-degree in accordance with the tilt direction of the display device 20 based on the control signal from the control (determination) circuit 13.

Here, the display screen 28A in the display direction of 0-degree (see FIG. 7) is a display screen when one end portion of the portable telephone 10 on the operating keys 26 side is lowered to tilt the portable telephone 10 in the direction indicated by the arrow A (see FIGS. 2 and 3). The display screen 28A is correctly opposed to the user. On the other hand, the display screen 28B in the display direction of 180-degree (see FIG. 7) is a display screen when the other end portion of the portable telephone 10 on the display device 20 side is lowered to tilt the portable telephone 10 in the direction indicated by the arrow B (see FIGS. 5 and 6). The display screen 28B is correctly opposed to a person facing the user. The display control circuit 19 switches the display direction on the display screen 28 (see FIGS. 2 and 3) to a direction according to the tilt direction of the display device 20.

The ROM 16 serving as the memory means has readout memory areas (such as a program area and a work area) used for programs for performing various processes and various data. For example, various data used for various indications such as electrical field indication at the receipt in the portable telephone 10 and battery indication are stored in the memory areas of the ROM 16. Data inputted by the user is stored in the RAM 15 serving as the recording means. In other words, the RAM 15 has a readout and write memory area used for various data (data such as a mail address).

The portable telephone 10 further includes the display control circuit 19 serving as a part of the switching means, the display device 20 connected with the display control circuit 19, and a talking circuit 21. The display control circuit 19 and the control circuit 13 compose the switching means (switching unit). The display control circuit 19 and the talking circuit 21 are connected with the control circuit 13. The talking circuit 21 is connected with a microphone and a speaker which are not shown. The microphone and the speaker are used for talking. The display device (liquid crystal display) 20 displays various data, information, or the like at the time of talking or the time of data transmitting and receiving.

### (Operation in First Exemplary Embodiment)

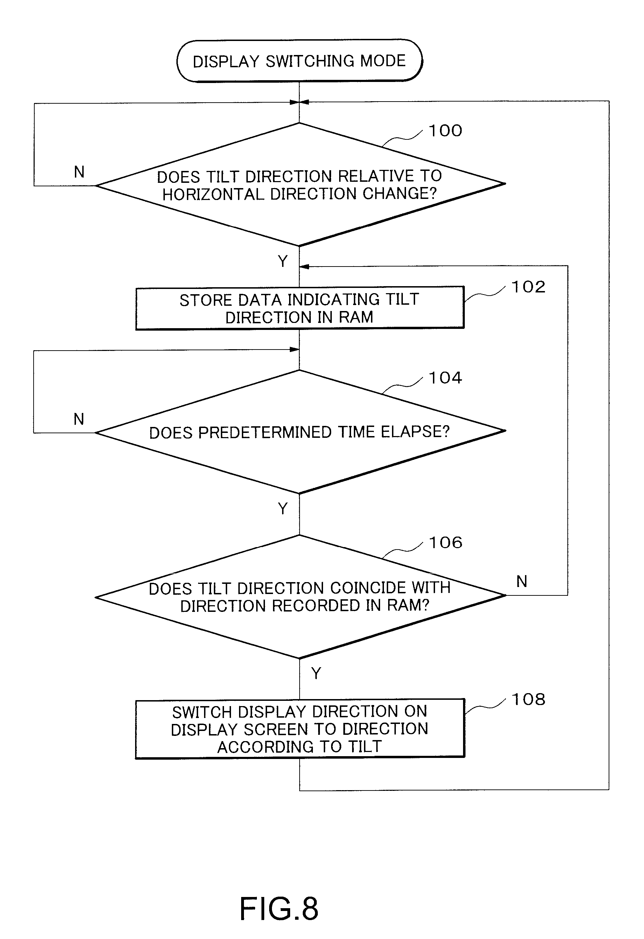

A process related to the display switching mode of the portable telephone 10 will be described with reference to FIG. 8. The display switching mode is a mode for switching the display direction to a direction as in the case of the display screen 28A or 28B (see FIG. 7) based on the detection signals (detection voltages) from the acceleration sensor 18 shown in FIG. 1.

FIG. 8 is a flowchart showing a process routine executed by the control circuit 13 of the portable telephone 10. A program indicating the process routine is stored in advance in the program area of the ROM 16. The flowchart shown in FIG. 8 is a process executed after the power source key of the portable telephone 10 is pressed (image is displayed on the display screen 28 of the display device 20 shown in FIG. 2) and the display switching mode is set.

The display switching mode is set by operating (pressing) the operating key (mode setting key) 26 (see FIG. 2) provided in the operating device 14 shown in FIG. 1. The process of the display switching mode is continued until the display switching mode is reset or the power source is turned off.

When the display switching mode is not set, the display direction on the display screen 28 shown in FIG. 2 or 5 is not switched to a display direction based on a result obtained by the acceleration sensor 18. As shown in FIG. 2, an initial direction on the display screen 28 is a display direction (direction of 0-degree) when the end portion of the portable telephone 10 on the operating keys 26 side is lowered to tilt the portable telephone 10 in the direction indicated by the arrow A (see the display screen 28A in FIG. 7).

In Step 100, the control circuit 13 determines whether or not the tilt direction of the display device 20 relative to the horizontal direction (HD) (see FIG. 3 or 6) changes. Before the process of Step 100, the control circuit 13 reads the detection signals from the acceleration sensor 18 and determines whether the tilt direction is the direction A (arrow A) shown in FIG. 3 or the direction B (arrow B) shown in FIG. 6 based on the read detection signals. As described above, the detection signals are outputted from the acceleration sensor 18 only when the tilt exceeds the angle θ (e.g., 10-15 degrees is an exemplary; other suitable value for quantity could be selected depending on the designer's requirements). Therefore, when the tilt is equal to or smaller than the angle θ, it is determined that the tilt direction does not change.

Whether or not the tilt direction changes is determined through comparison of the detection data (tilt data) with tilt data indicating a tilt direction, which has been already recorded in the RAM 15, by the control circuit 13. The tilt data indicating the tilt direction which is recorded in the RAM 15 is constantly updated and newest tilt data is recorded therein. In Step 100, the process waits until the tilt direction changes.

When Step 100 is YES, that is, when the tilt direction changes, the control circuit 13 causes the RAM 15 to record tilt data indicating a tilt direction of the display device 20 relative to the horizontal direction (HD) (see FIG. 3 or 6) (Step 102).

In Step 104, the control circuit 13 determines whether or not a predetermined time (for example, 500 ms) elapsed based on a time signal from the timer circuit of the control circuit 13. Note that the process of Step 104 waits for the predetermined time. When Step 104 is YES, that is, when the predetermined time elapsed, whether or not a current tilt direction coincides with the preceding (newest) tilt direction recorded in the RAM 15 in step 102 is determined in Step S106.

When Step 106 is YES, that is, when the tilt directions coincide with each other, in Step 108, the control circuit 13 and the display control circuit 19 switch the display direction on the display screen 28 to the direction of 180-degree (rotates display contents at 180 degrees) according to the tilt of the display device 20 shown in FIG. 3 or 6. When the process of Step 108 is completed, the process returns to Step 100 and the process of the flowchart continues to be executed.

On the other hand, when Step 106 is NO, that is, when the tilt directions of the display device 20 relative to the horizontal direction (HD) are different from each other, the process returns to Step 102. The control circuit 13 causes the RAM 15 to record tilt data indicating the tilt direction and executes the processes from S104. In other words, when Step 106 is NO, the control circuit 13 holds the display direction on the display screen 28 and thus does not perform switching thereof.

According to this exemplary embodiment, the display direction on the display screen 28 is switched to a direction only by tilting the portable telephone 10 (display device 20) relative to the horizontal direction. Therefore, it is unnecessary to change a manner of holding the portable telephone 10 or to perform the conventional key operation, so that the portable telephone or the like becomes convenient. That is, according to this exemplary embodiment, the display direction on the display screen 28 is switched to an orientation desired by a user by changing a tilt of the display device 20, so that the user can continuously hold the portable telephone 10 in a practiced orientation.

According to this exemplary embodiment, for example, the control circuit 13 and the display control circuit 19 which compose the switching means switch the display direction on the display screen 28 to a direction according to the tilt direction with respect to the tilt of the display device 20 relative to the horizontal direction. Therefore, switching of the display direction on the display screen 28 becomes quicker.

### (Second Exemplary embodiment)

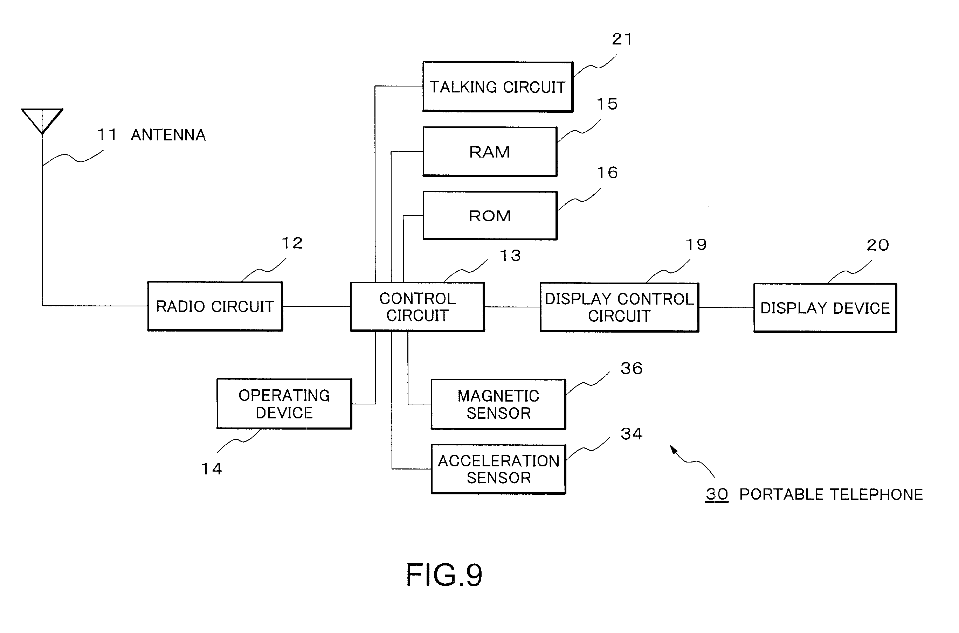

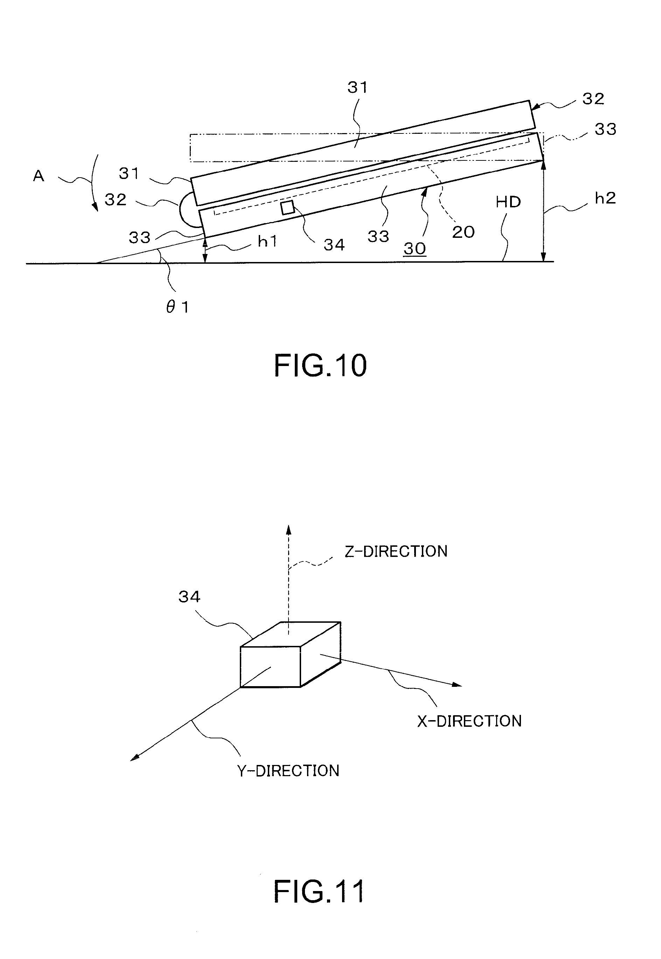

FIGS. 9 to 15 show a second exemplary embodiment of the present invention. A portable telephone according to this exemplary embodiment is a foldable type portable telephone 30 having two cases. A single display device is provided in one of the two cases. FIG. 9 is a block diagram showing the portable telephone according to this exemplary embodiment. FIG. 11 is a concept view showing an acceleration sensor in this exemplary embodiment. In the structure of the portable telephone according to this exemplary embodiment as shown in FIG. 9, the same references are provided for parts corresponding to those in FIG. 1 and thus the detailed description is omitted here.

The foldable type portable telephone 30 will be described with reference to FIG. 9. The portable telephone 30 includes a first case 33, a second case 31, and a hinge 32 serving as open-and-close means through which the first case 33 and the second case 31 are connected with each other. When the portable telephone 30 is opened or closed, the first case 33 and the second case 31 swing about the hinge 32.

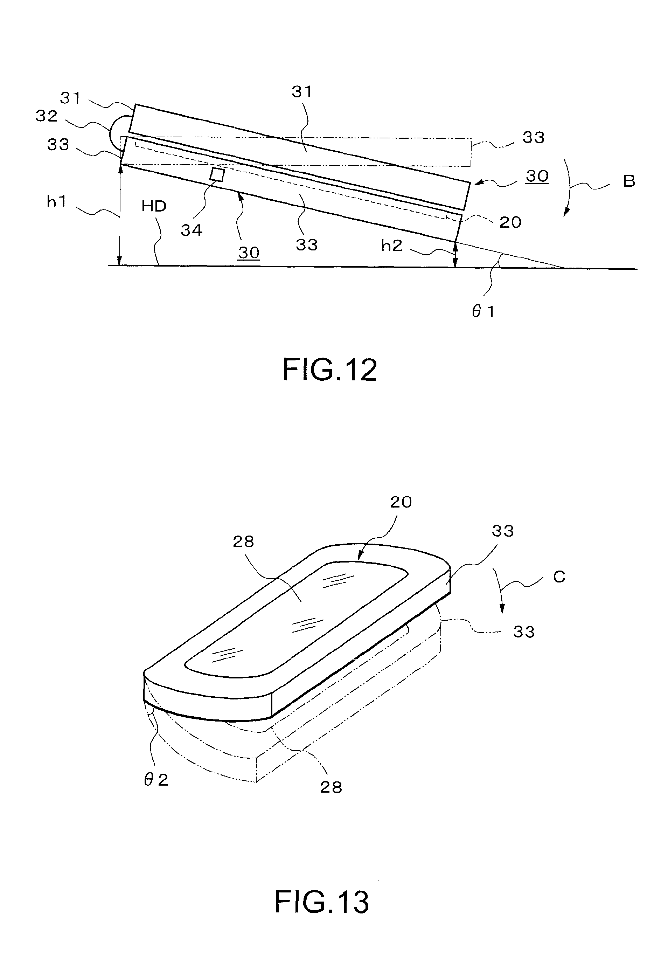

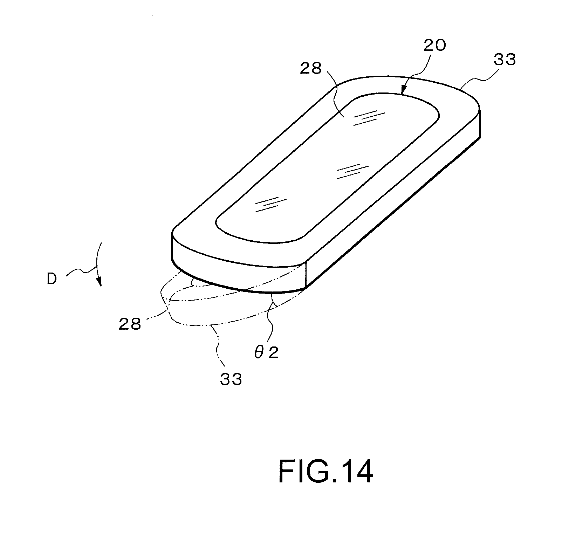

As shown in FIGS. 13 and 14, the display device 20 is provided in the first case 33. FIGS. 13 and 14 are perspective views showing only the first case 33. The operating device (input means) 14 including the plurality of operating keys is provided in the second case 31.

The display device 20 (see FIG. 10 or 12) is provided so as to always oppose the second case 31 when the portable telephone 30 is in a closed state. That is, the portable telephone 30 according to this exemplary embodiment is constructed such that the first case 33 and the second case 31 swing about the hinge 32 in only two directions, an opening direction and a closing direction.

A magnetic sensor 36 for detecting a folded state or an opened state is provided in the first case 33 and the second case 31. As shown in FIG. 9, the magnetic sensor 36 serving as open-and-close detection means is connected with the control circuit 13. The control circuit 13 determines whether the portable telephone 30 is in the folded state or the opened state based on a detection signal outputted from the magnetic sensor 36.

The magnetic sensor 36 is composed of, for example, a set of magnet type switches provided for a set of the cases 31 and 33. The detailed description of the magnetic sensor 36 is omitted here because it is well known. In addition to the magnetic sensor, a switch capable of detecting the folded state of the portable telephone including the cases 31 and 33, such as a pressing type switch can be similarly applied to the open-and-close detection means.

An acceleration sensor 34 in this exemplary embodiment is a biaxial acceleration sensor (the number of detectable axial directions is two) and can detect tilts of the display device 20 in the longitudinal direction (Y-direction) and lateral direction (X-direction) thereof. In other words, the acceleration sensor 34 detects an angle θ1 (see FIGS. 10 and 12) or an angle θ2 (see FIGS. 13 and 14) relative to the horizontal direction (HD) (see FIGS. 10 and 12) in the Y-direction (longitudinal direction) or X-direction (lateral direction) of the display device 20.

As shown in FIG. 11, the acceleration sensor 34 detects both tilts in the Y-direction (longitudinal direction of the display device 20) and the X-direction (lateral direction of the display device 20). Therefore, tilts of the portable telephone 30 in four directions can be detected. That is, the acceleration sensor 34 can detect a tilt (first tilt direction) when the display device 20 is tilted from a state indicated by a solid line of FIG. 10 to a state indicated by a two-dot chain line of FIG. 10 (see the arrow A in FIG. 10) and a tilt (second tilt direction) when the display device 20 is tilted from a state indicated by a solid line of FIG. 12 to a state indicated by a two-dot chain line of FIG. 12 (see the arrow B in FIG. 12).

The acceleration sensor 34 can also detect a tilt (third tilt direction) when the display device 20 is tilted from a state indicated by a solid line of FIG. 13 to a state indicated by a two-dot chain line of FIG. 13 (see the arrow C in FIG. 13) and a tilt (fourth tilt direction) when the display device 20 is tilted from a state indicated by a solid line of FIG. 14 to a state indicated by a two-dot chain line of FIG. 14 (see the arrow D in FIG. 14).

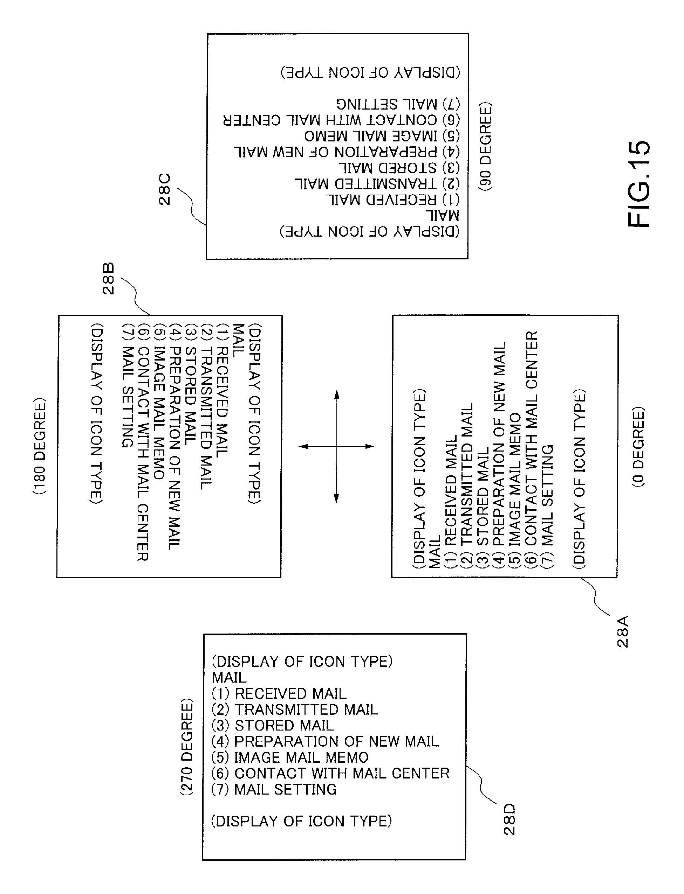

Therefore, according to the portable telephone 30 in this exemplary embodiment, as shown in FIG. 15, the display direction on the display screen 28 can be switched among four directions of 0-degree, 90-degree, 180-degree, and 270-degree based on the first to fourth tilt directions. Selection keys (selection means) provided in the operating device 14 are set such that switching of the display direction on the display screen 28 is performed every 90 degrees or 180 degrees.

With respect to the priority of switching of the display direction on the display screen 28, the control circuit 13 compares tilt data in the Y-direction (tilt angle θ1) with tilt data in the X-direction (tilt angle θ2) and gives high priority to the tilt direction related to a larger data value (tilt angle value). For example, assume that the case 33 (display device 20) is being tilted in the direction shown in FIG. 10 (Y-direction). Then, when the case 33 is further tilted at an angle larger than an angle related to the Y-direction in the direction shown in FIG. 10 (X-direction), the display direction on the display screen 28 is switched to a direction according to the tilt of the display device 20 in the X-direction (display contents rotate by 90 degrees). Therefore, the display screen 28 becomes a display screen 28C shown in FIG. 15. In other words, when the tilt in the X-direction is larger than the tilt in the Y-direction even in the case where the display device 20 is tilted in the Y-direction, high priority is given to the tilt in the X-direction.

Other structures are the same as those in the first exemplary embodiment and thus the detailed description is omitted here. In this exemplary embodiment, a triaxial acceleration sensor having an X-direction, a Y-direction, and a Z-direction (direction indicated by a dot line of an arrow in FIG. 11) may be used as the acceleration sensor 34. Here, the Z-direction indicates a vertical (perpendicular) direction.

In this exemplary embodiment, the display direction on the display screen 28 is switched among four directions of 0-degree, 90-degree, 180-degree, and 270-degree (corresponding to display screens 28A to 28D (see FIG. 15)) (according to the tilt direction of the display device 20) based on a result obtained by the acceleration sensor 34. Therefore, the portable telephone becomes more convenient.

A display format and the like on the display screen 28 can be arbitrarily changed. For example, when the display direction on the display screen 28 is switched to the direction of 0-degree (180-degree) or 90-degree (270-degree), processing for changing vertical writing into horizontal wiring or processing such as automatic carriage return may be executed on character data or the like. The order of display contents on the display screen 28 may be set so as to be reversed. Other operations and advantages are similar to those in the first exemplary embodiment and the detailed description is omitted here.

### (Third Exemplary embodiment)

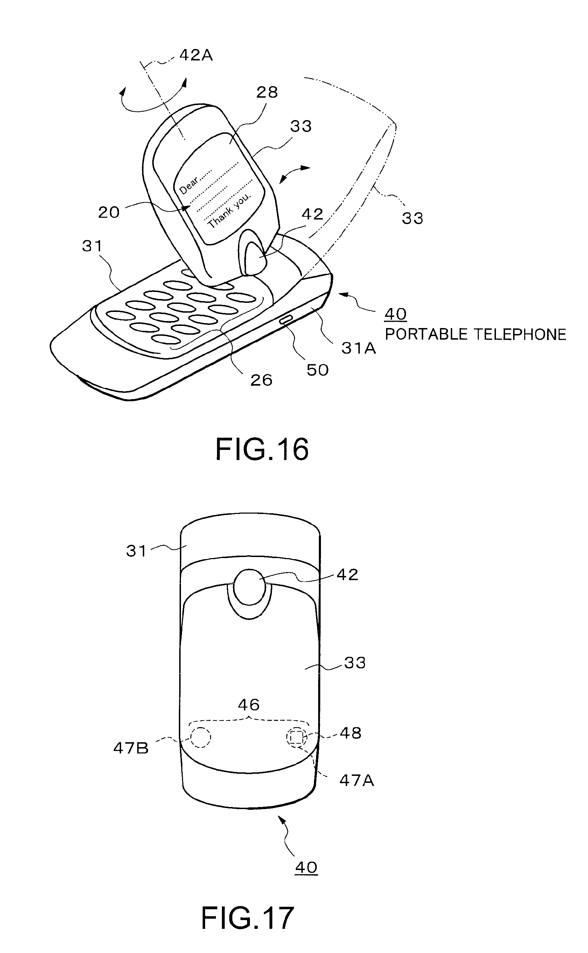

FIGS. 16 to 20 show a third exemplary embodiment of the present invention. A portable telephone according to this exemplary embodiment is a portable telephone 40 which is a foldable type and in which a display device can be folded outside. In other words, the portable telephone 40 according to this exemplary embodiment includes a hinge 42 having a structure different from that of the hinge 32 according to the second exemplary embodiment. A magnetic sensor 46 for detecting whether the portable telephone 40 is in the folded state or the opened state has a structure different from that of the magnetic sensor 36 according to the second exemplary embodiment.

In the portable telephone 40 according to this exemplary embodiment as shown in FIG. 16, the same references are provided for parts corresponding to those in FIG. 10 and thus the detailed description is omitted here. Other structures of the portable telephone 40 are identical to those of the portable telephone 30 according to the second exemplary embodiment. That is, a circuit structure of the portable telephone 40 other than the above-mentioned structures is identical to that of the portable telephone 30 according to the second exemplary embodiment. Therefore, contents related to the portable telephone 40 having two cases will be described with reference to FIGS. 9, 11, and 15. FIG. 16 is a perspective view showing a state where one case is rotated relative to the other case about a hinge axis.

The portable telephone 40 includes the first case 33 in which the (first) display device 20 is located, the second case 31 in which the operating keys are located, and the hinge 42 through which the first case 33 and the second case 31 are connected with each other such that the first case 33 and the second case 31 are allowed to be opened and closed. The hinge 42 is composed of a universal joint such as a ball joint. The hinge (biaxial hinge) 42 can pivot the first case 33 relative to the second case 31 (see a two-dot chain line in FIG. 16) and rotate about a hinge axis (rotational axis) 42A (see a chain line in FIG. 16) of the hinge 42 (see a solid line in FIG. 16).

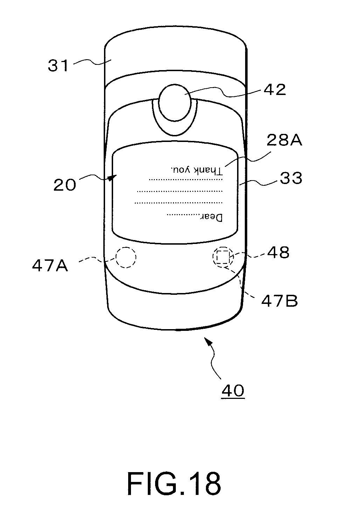

Therefore, as shown in FIG. 17, according to the portable telephone 40, the display device 20 (see FIG. 16) can be folded (closed) to oppose the operating keys 26 (see FIG. 16). On the other hand, as shown in FIG. 18, the display device 20 (see FIG. 16) can be folded with a state where the display screen thereof faces the outside (reverse state where the first case 33 is reversed).

According to portable telephone 40, the display screen of the display device (display surface) 20 can be viewed even when it is in the folded state (state shown in FIG. 18). In this exemplary embodiment, the operating keys may be provided on the display device 20 side of the first case 33 or on a side surface of the second case 31. In this case, in the time of folding as shown in FIG. 18, the operating keys can be operated while the display screen of the display device 20 is viewed. Therefore, the portable telephone becomes more convenient.

A holding key (holding means) 50 for fixing (holding) the display direction on the display screen of the display device 20 while it is pressed (operated) may be provided on a side surface 31A of the second case 31. The holding key 50 is provided at a position on the side surface 31A which substantially corresponds to the position of a thumb in a state where a user holds the second case 31. When the switching of the display direction is not desired, the holding key 50 is pressed. The display direction on the display screen is not changed while the holding key 50 is pressed, so that the desirable display direction can be fixed (held).

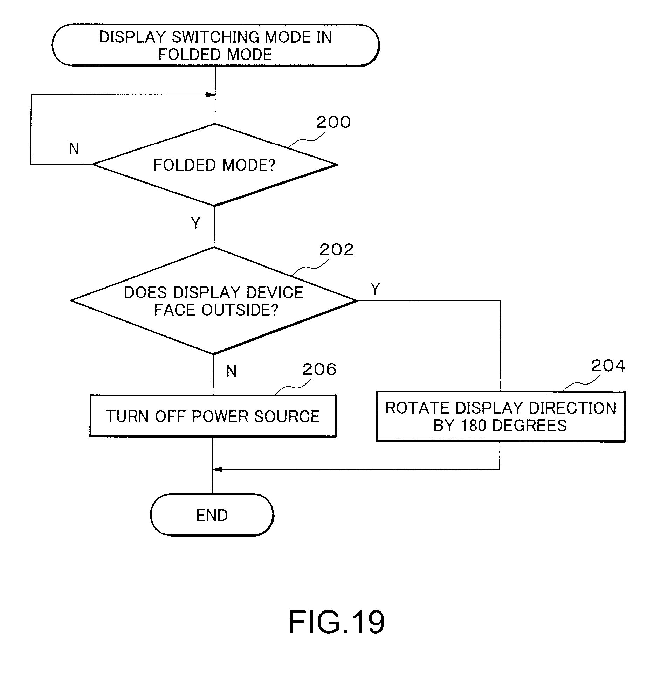

Next, the magnetic sensor 46 will be described with reference to FIG. 19. A set of magnets 47A and 47B is located at both ends of the first case 33 in a width direction thereof on an opposite side of the hinge 42. A magnet 48 opposed to the magnet 47A in a folded state where the display screen of the display device 20 faces the inside (state shown in FIG. 17) is located in the second case 31 (see FIG. 17).

On the other hand, in a folded state where the display screen of the display device 20 faces the outside (state shown in FIG. 18), the magnet 47B opposes the magnet 48 (see FIG. 18). Therefore, the magnetic sensor 46 according to this exemplary embodiment can detect the folded states (states shown in FIGS. 17 and 18) by using the magnet 47A or 47B opposing the magnet 48 and detect a folding direction of the first case 33. The magnetic sensor 46 is composed of the respective magnets 47A, 47B, and 48 and the like by a known technique and thus the detailed description is omitted here. Other structures are identical to those in the second exemplary embodiment and thus the detailed description is omitted here.

### (Operation of Third Exemplary embodiment)

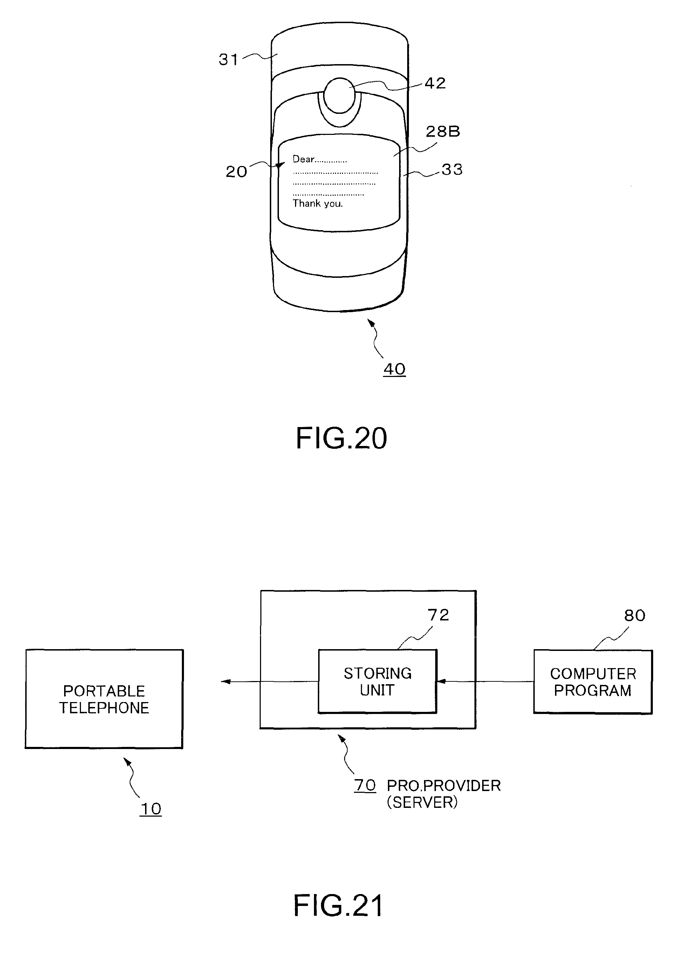

A display switching process related to a folded mode of the portable telephone 40 will be described with reference to FIG. 19. Here, the folded mode is a mode in which the set of cases 31 and 33 becomes the folded state as shown in FIG. 17 or 18. The display switching mode in the folded mode is a mode for switching the display direction on the display screen 28 to a direction corresponding to the display screen 28A (see FIG. 18) or 28B (see FIG. 20) based on a detection signal (result obtained by detection) of the magnetic sensor 46 shown in FIG. 17.

FIG. 19 is a flowchart showing a process routine executed by the control circuit 13 (see FIG. 9) of the portable telephone 40. A program indicating the process routine is stored in advance in the program area of the ROM 16. The flowchart shown in FIG. 19 is a process executed after the power source key of the portable telephone 40 is pressed (image is displayed on the display screen 28 of the display device 20 shown in FIG. 19). The process of the flowchart is executed every time the detection signal from the magnetic sensor 46 is switched. The process of the flowchart is completed when the power source key is operated (pressed) to turn off the power source.

In Step 200, the control circuit 13 determines whether or not the portable telephone is in the folded mode based on the detection signal from the magnetic sensor 46 shown in FIG. 17. The process of Step 200 continues until the portable telephone becomes the folded mode. When Step 200 is YES, that is, when the portable telephone is in the folded mode, in Step 202, the control circuit 13 determines whether or not the display device 20 (see FIG. 16) faces the outside based on the detection signal from the magnetic sensor 46 shown in FIG. 17. In other words, the control circuit 13 determines whether a detection signal is obtained from the magnet 47A or the magnet 47B.

When Step 202 is YES, that is, when the display device 20 faces the outside (in the case of the state shown in FIG. 18), as shown in FIG. 20, the control circuit 13 and the display control circuit 19 rotate the display direction of display contents on the display screen of the display device 20 by 180 degrees in Step 204. After the process of Step S4 is completed, the process of the flowchart is ended.

On the other hand, when Step 202 is NO, that is, when the display device 20 faces the inside (in the case of the state shown in FIG. 17), the control circuit 13 causes the power source of the display device 20 to turn off in Step 206. Then, the process of the flowchart is ended. The process of the flowchart shown in FIG. 19 is executed before the display switching mode shown in FIG. 8 is processed. In this exemplary embodiment, the process of the flowchart shown in FIG. 19 may be executed while the display switching mode shown in FIG. 8 is processed.

In this exemplary embodiment, as shown in FIGS. 18 and 20, even in the state where the display device 20 is folded outside, the display direction on the display screen 28 of the display device 20 is switched among the four directions according to the tilt direction of the display device 20 (see FIG. 15). Before the process of the display switching mode (process shown in FIG. 8), it is necessary to completely fold the set of cases 31 and 33. That is, it is required that the detection signal from the magnetic sensor 46 in the folded state shown in FIG. 18 be inputted to the control circuit 13 (see FIG. 9).

In this exemplary embodiment, the display direction on the display screen 28 is switched to a direction corresponding to the display screen 28A (see FIG. 18) or 28B (see FIG. 20) (according to the folding direction of the first case) based on a result obtained by the magnetic sensor 46. That is, according to this exemplary embodiment, the display direction on the display screen 28 (see FIG. 16) is switched to a direction in which a user holding the portable telephone 40 can easily view display contents. Therefore, the portable telephone is convenient.

In this exemplary embodiment, the display switching process related to the folded mode (process shown in FIG. 19) and the display switching mode process shown in FIG. 8 are executed if necessary (as appropriate). Therefore, the display direction on the display screen 28 (see FIG. 16) is constantly switched to an adequate direction (front direction in which the user or a third person can easily view display contents). Other operations and advantages are similar to those in the second exemplary embodiment and the detailed description is omitted here.

In this exemplary embodiment, the display device 20 may be provided on each of both surfaces of the first case 33. That is, the first case 22 comprises a second display device provided to oppose a rear surface opposite to the display screen 28 of the first display device 20. Even when a plurality of display devices 20 are located on each of both surfaces of the first case 33, the display switching mode process shown in FIG. 8 or the display switching process related to the folded mode (process shown in FIG. 19) is executed. Therefore, the display direction on the display screen 28 is constantly switched to an adequate direction (front direction from which a person views the display screen 28). That is, even in the case of the folded mode in which the display device 20 is located on the outside, the display direction on the display screen 28 is switched among the four directions according to the tilt direction of the display device 20 (see FIG. 15). When the display device 20 is held in the horizontal direction, the display direction on the display screen 28 may be switched to an initial direction or the preceding display direction on the display screen 28 may be held.

### (Fourth Exemplary embodiment)

FIG. 21 shows a fourth exemplary embodiment of the present invention. In this exemplary embodiment, a portable telephone 10 and a computer program provider (For example, server) 70 are connected so as to be able to communicate with each other through wireless communication.

In the portable telephone 10 according to this exemplary embodiment as shown in FIG. 21, the same references are provided for parts corresponding to those in FIG. 1 and thus the detailed description is omitted here.

A computer program 80 is inputted into the program provider 70 and stored in a storing unit 72 thereof. The stored computer program 80 in a storing unit 72 is provided by a radio or wired signal to the portable telephone 10 (the detailed structure is shown in FIG. 1) and stored in the RAM 15 thereof. The stored computer program 80 is implemented by the control circuit 13 of the portable telephone 10 so that control circuit 13 can detect a tilt of the display devise 20 of the portable telephone 10. The detected tilt is translated by the computer program 80 into the data so that the display control circuit 19 of the portable telephone 10 switches a display direction on the display devise 20 based on the translated data.

The fourth exemplary embodiment is not limited into the above structure and operations. Appropriate modification of the above structure and operations in this exemplary embodiment can be achieved with surroundings to which the invention according to this exemplary embodiment is applied. At least, the program provider 70 in this exemplary embodiment can be composed by a CD-ROM with the well known technology to the skilled in the art.

With respect to a combination in the present invention, for example, two or more of the respective embodiments and modified examples may be combined with each other. As shown in FIG. 1, a display apparatus according to the first exemplary embodiment is an apparatus which includes the tilt detection means for detecting the tilt of the display device 20 relative to the horizontal direction (acceleration sensor 18) and the switching means for switching the display direction on the display screen 28 (see FIG. 2) of the display device 20 to a direction according to the tilt direction based on the tilt detected by the tilt detection means (control circuit 13 and display control circuit 19).

As shown in FIG. 3, electronic equipment according to the first exemplary embodiment is an equipment which includes the case 22 having the display device 20, the tilt detection means for detecting the tilt of the display device relative to the horizontal direction (acceleration sensor 18), and the switching means for switching the display direction on the display screen of the display device to a direction according to the tilt direction based on the tilt detected a result obtained by the tilt detection means (control circuit 13 and display control circuit 19 in shown FIG.2).

As shown in FIG. 10, electronic equipment according to the second exemplary embodiment is an equipment which includes the first case 33 having the first display device 20, the second case 31 having the input means (operating device 14 in shown FIG.9), the open-and-close means (hinge 32) for connecting the first case 33 with the second case 31 such that the first case 33 and the second case 31 are allowed to be opened and closed, the detection means for detecting the tilt of the first display device 20 relative to the horizontal direction (acceleration sensor 34), and the switching means for switching the display direction on the display screen 28 (see FIG.13) of the first display device 20 to a direction according to the tilt direction based on the tilt detected by the detection means (control circuit 13 and display control circuit 19 in shown FIG.9).

The electronic equipment according to the present invention conceptually includes apparatuses for which display apparatus described in the respective embodiments are required, such as portable telephones, personal computers, personal digital assistants (PDAs), and cameras on the scope of invention being defied by claims.

Further, it is noted that the inventor's intent is to retain all equivalents of the claimed invention even if the claims are amended during prosecution.

In summary an embodiment of the invention can be described as follows: electronic equipment includes a first case including a first display device having a display screen, a second case including input means, open-and-close means for connecting the first case with the second case such that the first case and the second case are allowed to be opened and closed, detection means for detecting a tilt of the first display device relative to a horizontal direction, and switching means for switching a display direction on the display screen of the first display device to a direction according to a direction of the tilt detected by the detection means.

## Claims

1. Electronic equipment, comprising:
a first case including a first display device having a display screen;
a second case including an input means;
open-and-close means for connecting the first case with the second case such that the first case and the second case are allowed to be opened and closed;
detection means for detecting a tilt of the first display device relative to a horizontal direction; and
switching means for switching a display direction on the display screen of the first display device to a direction according to a direction of the tilt detected by the detection means.

2. The electronic equipment according to claim 1,
wherein the open-and-close means connects the first case with the second case and allows one of the first case and the second case to rotate about a rotational axis in a pivoted state where the first case and the second case are pivoted, and
the display screen of the first display device is set to one of an inner surface of the first case opposing the second case and an outer surface thereof by the open-and close means in a folded state where the first case and the second case are folded.

3. The electronic equipment according to claim 2, further comprising:
second detection means for detecting a position of the first display device relative to the second case in the folded state,
wherein the switching means switches the display direction to a direction based on at least one of the tilt and the position detected by at least one of the detection means and the second detection means.

4. The electronic equipment according to any of the preceding claims,
wherein switching of the display direction is performed every 90 degrees or 180 degrees.

5. The electronic equipment according to any of the preceding claims,
wherein the first case further comprises a second display device provided to oppose a rear surface opposite to the display screen of the first display device.

6. The electronic equipment according to any of the preceding claims,
wherein the second case further comprises holding means for holding the display direction during operation without being based on the tilt detected by the detection means.

7. The electronic equipment according to an of the preceding claims, further comprising:
selection means for selecting a switching mode for switching the display direction on the display screen of the first display device to a direction based on the tilt detected by the detection means.

8. The electronic equipment according to claim 7,
wherein switching of the display direction is performed every 90 degrees or 180 degrees by the selection means.

9. The electronic equipment according to any of the preceding claims,
wherein the detection means detects tilts in two directions of an Y-direction and an X-direction which are orthogonal to each other along a surface of the first display device, and
the switching means switches the display direction on the display screen to a direction according to one of the two directions which is related to a larger tilt of the detected tilts based on the tilt detected by the detection means.

10. The electronic equipment according to any of the preceding claim,
wherein the switching means switches the display direction on the display screen to a direction when at least one of a time interval for the result obtained by the detection means is longer than a predetermined time and when an angle of the display device relative to the horizontal direction exceeds a predetermined angle.

11. Electronic equipment, comprising:
a case including a display device having a display screen;
tilt detection means for detecting a tilt of the display device relative to a horizontal direction; and
switching means for switching a display direction on the display screen of the display device to a direction according to a direction of the tilt detected by the tilt detection means.

12. A display apparatus, comprising:
tilt detection means for detecting a tilt of a display device relative to a horizontal direction; and
switching means for switching a display direction on a display screen of the display device to a direction according to a direction of the tilt detected by the tilt detection means.

13. The display apparatus according to claim 12, further comprising:
selection means for selecting a switching mode for switching the display direction on the display screen of the display device to a direction based on the tilt detected by the tilt detection means.

14. The display apparatus according to claim 12 or 13, further comprising:
holding means for holding the display direction during operation without being based on the tilt detected by the tilt detection means.

15. The display apparatus according to any of claims 12 to 14,
wherein the tilt detection means detects tilts in two directions of an Y-direction and an X-direction which are orthogonal to each other along a surface of the display device, and
the switching means switches the display direction on the display screen to a direction according to one of the two directions which is related to a larger tilt of the detected tilts based on the tilt detected by the tilt detection means.

16. The display apparatus according to any of claims 12 to 15,
wherein the switching means switches the display direction on the display screen to a direction when at least one of a time interval for a result obtained by the tilt detection means is longer than a predetermined time and when an angle of the display device relative to the horizontal direction exceeds a predetermined angle.

17. A display switching method, comprising:
detecting a tilt of a display device relative to a horizontal direction; and
switching a display direction on a display screen of the display device to a direction according to a direction of the tilt based on a result of the detection.

18. The display switching method according to claim 17, further comprising:
detecting tilts in two directions of an Y-direction and an X-direction which are orthogonal to each other along a surface of the display device; and
switching the display direction on the display screen to a direction according to one of the two directions which is related to a larger tilt of the detected tilts based on a result of the detecting tilts.

19. The display switching method according to claim 17 or 18,
wherein the display direction on the display screen is switched to a direction when at least one of a time interval for a result of the detecting the tilt is longer than a predetermined time and when an angle of the display device relative to the horizontal direction exceeds a predetermined angle.

20. The display switching method according to any of claims 17 to 19, further comprising:
providing a computer program which translates the result of the detection in the detection step into data to implement the switching step so that the display direction on the display screen of the display device is switched based on the data.

21. A method of a program provider for providing a computer program to electric equipment having a display devise, comprising:
storing a computer program which is implemented by the electric equipment and at least includes the steps of:
(i) detecting a tilt of the display device relative to a horizontal direction,
(ii) translating the result of the detection into data and
(iii)switching, based on the data, a display direction on a display screen of the display devise;
and
providing the computer program to the electric equipment.

22. Electronic equipment, comprising:
a first case including a first display device having a display screen;
a second case including an operating device;
a hinge which connects the first case with the second case such that the first case and the second case are allowed to be opened and closed;
a detection unit which detects a tilt of the first display device relative to a horizontal direction; and
a switching unit which switches a display direction on the display screen of the first display device to a direction according to a direction of the tilt detected by the detection unit.
